**Europäisches Patentamt**

(19) **European Patent Office**

**Office européen des brevets**

(11) Publication number : **0 381 691 B1**

(12) **EUROPEAN PATENT SPECIFICATION**

(45) Date of publication of patent specification :
07.10.92 Bulletin 92/41

(51) Int. Cl.⁵ : **A01N 25/04**

(21) Application number : **88909101.3**

(22) Date of filing : **14.10.88**

(86) International application number :
**PCT/GB88/00863**

(87) International publication number :
**WO 89/03176 20.04.89 Gazette 89/09**

(54) **LATEX-BASED AGRICULTURAL COMPOSITIONS.**

(30) Priority : **14.10.87 GB 8724132**
**14.10.87 GB 8724133**
**27.07.88 GB 8817930**

(43) Date of publication of application :
**16.08.90 Bulletin 90/33**

(45) Publication of the grant of the patent :
**07.10.92 Bulletin 92/41**

(84) Designated Contracting States :
**AT BE CH DE FR GB IT LI LU NL SE**

(56) References cited :
**BE-A- 708 798**
**DE-A- 3 304 457**
**GB-A- 658 222**
**GB-A- 1 367 137**
**GB-A- 2 072 506**
**GB-A- 2 138 291**
**US-A- 3 400 093**
**Central Patents Index, Basic Abstracts Jouranl, Section C, week K23, 3. Aug. 1983, no. 55173, Derwent Publ. Ltd, (London, GB)**

(73) Proprietor : **DOWELANCO**
**9002 Purdue Road**
**Indianapolis, Indiana 46268-3030 (US)**

(72) Inventor : **SMITH, Geoffrey, William**
**Wisteria Cottage 5 New Road**
**Buckland Faringdon Oxfordshire SN7 8QN (GB)**
Inventor : **MULQUEEN, Patrick, Joseph**
**8 Sewell Close**
**Abingdon Oxfordshire OX14 3YJ (GB)**
Inventor : **PATERSON, Eric, Simmers**
**21 Colne Close**
**Grove Wantage Oxfordshire OX12 0NN (GB)**
Inventor : **CUFFE, John**
**3 Yew Tree Farm Station Road**
**Heacham Norfolk PE31 7HG (GB)**

(74) Representative : **Raynor, John et al**
**W.H. Beck, Greener & Co 7 Stone Buildings Lincoln's Inn**
**London WC2A 3SZ (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

LATEX-BASED AGRICULTURAL COMPOSITIONS

This invention relates to agricultural compositions, and in particular to herbicidal, fungicidal, and insecticidal compositions (hereinafter referred to as pesticidal compositions), for a variety of pre and post-emergence applications.

It is generally desired of such pesticidal compositions that they should be easy to handle, and to apply in any desired concentration. Pesticidal compositions are generally supplied in a variety of forms, for example as wettable powders, emulsifiable concentrates, and suspension concentrates. Such types of formulation have application for a wide range of active ingredients.

It is often desirable to incorporate two active components into a single agricultural composition. Thus, for example, it will often be desirable to incorporate together two different types of insecticide, or two different types of herbicide, in order to obtain a broader spectrum of activity. Also, it is frequently desired to incorporate different types of pesticide within the same composition, for example to formulate a fungicide with a herbicide, or a fungicide with an insecticide. Attempts to formulate such compositions containing two active ingredients can given rise to substantial difficulties because of various types of incompatability between the active substances employed. Examples of different types of incompatibility are the following:-

(a) physico-chemical incompatibility

(b) chemical incompatibility

(c) biological incompatibility (often evidenced as a phytotoxic response).

(a) Examples of physico-chemical incompatibility are the following:-

1. From a biological standpoint, a mixture of fluroxypyr (as 1-methyl heptyl ester) with chlortoluron is attractive. Fluroxypyr 1-methyl heptyl ester is an organosoluble product with a melting point of about 56°C, usually formulated as an emulsifiable concentrate. Chlortoluron is a high melting point product normally formulated as an aqueous suspension concentrate. When attempts are made to produce a suspension concentrate of the mixture, by milling both components together in an aqueous medium, a melting point depression is observed rendering the formulation unstable.

2. Again, from a biological standpoint, it is often desirable to attempt to mix chemicals which are either oils or low melting point solids of appreciable organic solvent solubility with solids of high melting point and low organic solvent solubility. This technique of of preparing suspension-emulsions is very difficult due mainly to the problem of preventing transfer of material between phases resulting in gross physical changes or chemical instability. Some advances have been made in this area, as exemplified by European Patent Application No. 0117999 which describes the use of phthalate esters as solvents to produce acceptable formulations. This disclosure is however restricted to a limited range of pesticides since the pesticide must be compatible with phthalate esters.

3. The problem of mixing a non-aqueous phase with an electrolyte solution is one often addressed by the pesticide formulator and although specific products can be producted to be compatible with electrolytes, these are often so finely balanced in terms of emulsion performance that the product does not perform well in dilution in the natural water of a spray-tank. This difficulty is especially true with liquid fertilizer applications but also in the case of mixing one pesticide active as a salt solution with an oil-solution of another pesticide and attempting to produce a stable mixture therefrom.

4. When chemicals interact to produce melting point depressions, if that melting point depression is large the resultant mixed melting point product can sometimes be formulated in the same way as a low melting point single component but there still remains the problem of formulating this new oil-phase with a solid phase. This cannot easily be achieved using conventional technology.

(b) Examples of chemical incompatibility of components are very many but can be illustrated by the following:

Chlorpyrifos-methyl is an organo-phosphate pesticide which has shown an improved spectrum of activity when sprayed with another type of pesticide, the insect growth regulators, the acyl areas. One of this group, [1- 3,5-dichloro-4 (1,1,2,2-tetrafluoroethoxy) phenyl]-3- (2,6-difluorobenzoyl) urea, referred to herein as "Active N" is highly active in combination with chlorpyrifos-methyl. Active N is only poorly organosoluble, necessitating the use of potent solvents e.g.N-methyl pyrrolidone in order to achieve oil solution of both chlorpyrifos-methyl and Active N. In such solutions however, there is a chemical incompatibility between chlorpyrifos-methyl and Active N resulting in the ester hydrolysis of chlorpyrifos-methyl. Other methods are therefore required to achieve such mixed products.

(c) Examples of biological incompatibility are usually those where mixtures of products demonstrate lack of efficacy (often traced back to a chemical or physico-chemical incompatibility) or where mixtures of prod-

2

ucts show increased unacceptable crop damage (phytotoxicity). An example of this is a mixture of bifenox with a non-aqueous solvent, when applied to cereals. Bifenox in combination with most non-aqueous solvents (sometimes just in combination with surfactant) is usually unacceptably phytotoxic. Therefore it is desirable to provide a method of lowered phytotoxicity when mixing a product such as bifenox with an herbicide soluble in non-aqueous solvents, designed to broaden its spectrum of activity.

Naturally, some pesticide mixtures will display more than one of the problems outlined above but these are all problems necessary to be overcome by the formulation chemist in order to prepare marketable pesticide formulations.

European Patent Specification No. 0080516, discloses insecticidal compositions in which the active substance is incorporated within particles of a latex and that thereby waterborne dispersions may be prepared. These prior art disclosures are however, restricted to the use of specific insecticides, chlorpyrifos and chlorpyrifos-methyl, and the disclosure indicates that it is essential that the pesticide utilised is either a liquid or a low-melting solid at ambient temperatures, so that it can be solubilised into the polymer at temperatures less than 100°C as a liquid. Furthermore the disclosure does not indicate that such use of latex-containing pesticidal formulations can eliminate incompatabilities between otherwise incompatible active ingredients.

Furthermore, although the method disclosed in EP 0080516 enables the preparation of latex-containing compositions of chlorpyrifos, its method requires that the active substance should be heated to 60°C for 2 hours. This is both inconvenient to carry out industrially, and can give rise to thermal degradation of the chlorpyrifos. In addition the method is very unsatisfactory with pesticides which have a somewhat higher melting point.

GB-A-2072506 (Desowag-Bayer) is concerned with a film-forming wood preservative concentrate substantially free of inorganic salts or pigments. The compositions disclosed therein comprise an insecticide or fungicide, a water insoluble solvent, and a water-diluable aqueous plastics dispersion which may be a polymer or copolymer of a vinyl ester, an acrylic acid ester, or a methacrylic acid ester. The compositions also comprise from 0 to 2% of an emulsifier. Although the compositions are somewhat diluable in water (up to 1:4), the compositions are not in the nature of suspension concentrates, i.e. ones which are essentially infinitely diluable (particularly diluable up to at least 50:1) in water. This is not surprising when it is considered that the essential . characteristic of the compositions of the reference is that they contain drying oils and/or an alkyd resin. They are thus in the nature of paints, for application to timber and the like and the purpose of the latex in the composition is to act as a film-former.

It is inconsistent with the latex acting as film-former that high levels of surfactant should be present, and in particular that a sufficient amount of surfactant should be present to enable the compositions to be essentially infinitely diluable with water). It is well known that the presence of surfactants will interfere with the film forming properties of latex dispersions such as are described in GB-A-2072506, such that incomplete and non-adhesive deposits will be produced, and not the continuous adherent films which the Patentees seek to produce.

As in EP-A-0080516, GB-A-2072506 does not teach that the use of a latex in a pesticide composition is effective to improve compatability of incompatible active materials.

GB-A-658222 (B.F. Goodrich) discloses pesticidal composition containing a latex of PVC or the like, to assist the active material to stick to the intended substrate. This patent is not however concerned with the preparation of stabilised concentrate solutions.

U.S. 3400093 (Feinberg) discloses insecticide-containing compositions including polymers and polymer latexes. The latexes are present in these compositions to improve their coating properties and are the compositions are not like those of GB-A-207250 and GB-A-658222, and are not water-dilutable concentrates.

DE-A-3304457 (Toagosei Chem Ind (sic)) is concerned with the dispersion of solid pesticidal particles within a latex.

JP-A-8072-501 (Toa Gosei Chem Ind) is concerned with the preparation of what are effectively solutions of high molecular weight polymers, including pesticidal substances, which are obtained by the neutralisation of an acid dispersion of a copolymer with an alkali. This reference is not concerned with the stabilisation of pesticide-containing emulsions, using polymer latexes.

GB-A-2138291 (Tzang) is also concerned with the coating compositions in the nature of paints, containing insecticidally active ingredients. These compositions contain polymer latexes.

BE-A-708798 (Bayer) is similar in some ways in its disclosure to EP 0080516, in that it is concerned with insecticidal compositions, in which the insecticidalmaterial can be directly imbibed into the particles of a latex for application purposes.

GB-A-1367137 (PVO International) is concerned with insecticidal compositions for mothproofing of wool. The aim of the invention is to improve the persistence of insecticides in a treated fabric, by holding the insecticidal material in place on the woollen substrate, using a polymer, which has been polymerised in situ. This is achieved by applying the insecticidal material as a composition including a polymerisable resin. Such resins are, in some embodiments, used in the form of a latex.

None of these references address the problems of incompatability between different active ingredients in pesticidal compositions.

We have now surprisingly discovered that incompatibility problems such as discussed above can largely be solved for many systems by formulating the composition in the form of a pesticide-containing aqueous latex dispersion wherein a first one of the active components is substantially wholly contained in a dispersed phase derived from a latex. The second active component is not substantially wholly contained within this phase and is present as a dispersion and/or a solution in the continuous aqueous phase.

Accordingly, the invention provides an agricultural composition, comprising at least a first active pesticidal component, and at least one other active component which is a second pesticidal component or a fertiliser,

wherein the said at least one other active component is physico-chemically, chemically or biologically incompatible with the first pesticidal component, the composition being in the form of an aqueous dispersion having a continuous aqueous phase, and at least a first dispersed phase,

wherein the composition comprises at least one emulsifying surfactant in an amount sufficient to render the composition water-dispersible,

characterised in that the first dispersed phase contains particles derived from a latex, the said first pesticidal component is present in the composition substantially wholly within the said first dispersed phase, and in that the said other at least one active ingredient is essentially all present either in the continuous aqueous phase, or in a second dispersed phase, whereby the said incompatability is reduced or eliminated.

The pesticide-containing latex dispersion may be produced by, for example, the method disclosed in EP 000516 when the active substance has a suitably low melting point e.g. 40°C or lower. Alternatively and preferably the active substances may be dissolved in an appropriate water-immiscible solvent, and thus an oil-in-water emulsion of the resulting solution is formed. The emulsion is combined with a latex and the second active substance.

The term "particles" as used herein is not meant to carry with it any implication as to the physical state (i.e. liquid or solid) of the dispersed phase, and specifically is intended to include within its scope droplets comprising the pesticidal substance. It should also be understood that the term "water immiscible" as used herein is not intended to signify that the solvent is totally water-immiscible but only that the solvent is not freely miscible with water.

The term "latex" as used herein is intended to include any polymeric product produced as an aqueous suspension by an emulsion polymerisation process and includes within its scope both synthetic latexes and natural latexes.

The preferred latexes comprise polymers and copolymers of styrene, alkyl styrenes, isoprene, butadiene, acrylonitrile, lower alkyl acrylates, vinyl chloride, vinylidene chloride, vinyl esters of lower carboxylic acids and alpha, beta-ethylenically unsaturated carboxylic acids, including polymers containing three or more different monomer species copolymerised therein, the size of the polymeric particles being in the range of from 0,03 to 20 microns, preferably from 0.1 to 10 microns. Small amounts for example 0-10% of bifunctional vinyl monomers may be employed to crosslink the polymers if desired.

Specifically, it has been discovered that particularly good results are obtained when the initial droplet size of the emulsion formed is from 1 to 100 microns, wherein the latex employed has a particle size of from 0.03 to 20 microns, and wherein the resulting dispersion formed has a particle size which lies between that of the initially-formed emulsion particles, and that of the latex particles. This can be determined by examining optically the average particle size of the dispersion formed, and noting optically the change of the particle size with time.

In general, it is found that an emulsion having a relatively large particle size (1 to 100 microns) is formed initially, but that the droplet size decreases with time. It is believed the latex combines with the emulsion droplets to produce a dispersion having a substantial number of particles with an intermediate particle size, for example in the range of 0.03 to 20 microns, preferably from 0.1 to 10 microns, more preferably from 0.1 to 5 microns, more preferably still from 0.1 to 2 microns. Some individual droplets larger than these size ranges may also be present.

The first active pesticidal component may, preferably be dissolved in a water immiscible solvent prior to the initial emulsion formation, or if it has a sufficiently low melting point, it may be emulsified without the use of an organic solvent.

The latex may be present when the initial emulsion is formed, in which case the emulsion droplets will begin to combine with the latex immediately after they are formed. Alternatively, an emulsion may first be formed by combination of the solution of the pesticide with the emulsifier, in the presence of water, and the emulsion thus formed may thereafter be combined with the latex.

In order to form an initial aqueous dispersion of pesticide solution having the desired droplet size, it has been found necessary to employ an emulsifier (i.e. a surfactant). The emulsifier can be incorporated into the continuous (aqueous) phase, (in which case the surfactant preferably has a hydrophile-lipophile balance (HLB) number of 12 or more). Alternatively the surfactant may be incorporated into the dispersed phase (in which case the surfactant preferably has a HLB number of less than 12).

Surfactants which can be advantageously employed herein can be readily determined by those skilled in the art and include various nonionic, anionic, cationic or amphoteric emulsifiers, or a blend of two or more emulsifiers may be employed. The surfactant employed for the emulsification of the non-aqueous phase should be compatible with the latex and with any surfactants which may be present in the latex composition.

Examples of nonionic surfactants useful in preparing the oil-in-water emulsion include the polyalkylene glycol ethers and condensation products of alkyl phenols, aliphatic alcohols, aliphatic amines or fatty acids with ethylene oxide, propylene oxide or mixtures of ethylene and propylene oxides such as the ethoxylated alkyl phenols or ethoxylated aryl or polyaryl phenols and carboxylic esters solubilised with a polyol or polyoxyethylene. Cationic emulsifiers include quaternary ammonium compounds and fatty amines. Anionic emulsifiers include the oil-soluble (eg calcium, ammonium) salts of alkyl aryl sulphonic acids, oil soluble salts of sulphated polyglycol ethers, salts of the esters of sulphosuccinic acid, or half esters thereof with nonionic surfactants and appropriate salts of phosphated polyglycol ethers. Preferred emulsifiers are those which form and stabilise oil-in-water emulsions such as ethoxylated alcohols, alkoxylated alkyl phenols or polyalkylene oxide co-polymers. The surfactant is employed in an amount sufficient to ensure that the emulsion so formed prior to addition of a latex is easily formed and yet does not cause the latex to coagulate. This amount will be from 0,1 to 15,0% of the total composition, preferably 1,0% w/w to 10%.

The nature of the water-immiscible solvent, if present, used in the present invention will vary depending upon the pesticidal substance which it is desired to incorporate, and the latex type. Specific examples, however, are the aromatic liquids, particularly alkyl substituted benzenes such as xylene or propyl benzene fractions, and mixed naphthalene and alkyl naphthalene fractions; mineral oils, substituted aromatic organic liquids such as dioctyl phthalate; kerosene, polybutenes; dialkyl amides of various fatty acids, particularly the dimethyl amides of fatty acids such as the dimethyl amide of caprylic acid; chlorinated aliphatic and aromatic hydrocarbons such as 1,1, 1-trichloroethane and chlorobenzene, esters of glycol derivatives, such as the acetate of the n-butyl, ethyl, or methyl ether of diethylene glycol, the acetate of the methyl ether of dipropylene glycol, ketones such as isophorone and trimethyl cyclo-hexanone (dihydroisophorone) and'the acetate products such as hexyl, or heptyl acetate. The preferred organic liquids are xylene, propyl benzene fractions, dihydroisophorone, and alkyl acetates.

Pesticidal substances suitable for use as the first pesticidal component in the composition in accordance with the invention include the following insecticides:-

allethrin
amitraz
azinphos-ethyl
azinphos-methyl
benfuracarb
benzoximate
bifenthrin
binapacryl
bioallethrin
bioresmethrin
bromophos
bromophos ethyl
bromopropylate
butocarboxim
cypermethrin
deltamethrin
demeton
demeton-S-methyl
1,3-dichloropropene
dichlorvos
dicofol
dinobuton
dioxabenzofos
dioxacarb
dioxathion
disulfoton
endosulfan
EPN

butocarboxim
carbophenothion
carbosulfan
chlordimeform
chlorfenvinphos
chlormephos
chlorobenzilate
chloropropylate
chlorphoxim
chlorpyrifos
chlorpyrifos-methyl
crotoxyphos
cyanophos
cyfluthrin
cyhalothrin
ethiofencarb
ethion
ethofumesate
ethoprophos
etrimfos
fenamiphos
fenitrothion
fenocarb
fenpropathrin
fenthion
fenvalerate
flucythrinate
fluvalinate
fonofos
furathiocarb

pirimiphos-methyl
profenofos
promecarb
propaphos
propargite
prothiofos
quinalphos
resmethrin
sulprofos
temephos
tetradifon
tetramethrin
thiocyclam
thiometon
tralomethrin
triazophos
xylylcarb

heptenophos
hydroprene
isofenphos
isoxathion
malathion
mecarbam
mephospholan
methacrifos
methidathion
methoprene
mevinphos
naled
parathion
parathion methyl
permethrin
phenothrin
phosalone
phosfolan
phosmet
phoxim

N-2,3-dihydro-3-methyl-1,3-thiazol-2-ylidene-2,4-xylidine.
the following fungicides:-

benalaxyl
bis-(2,4-dichlorophenyl
ethyl phosphate)
bupirimate
buthiobate

carboxin
dodine
edifenphos
etridiazole
imazalil
iprobenfos
nuarimol
oxycarboxin
tolclofos-methyl

dodemorph
tridemorph
fenpropidin
fenpropimorph
and other
morphine fungicides
and ergosterol
biosynthesis
inhibitors such as
bitertanol
fenarimol
myclobutanil
penconazole
prochloraz
triadimefon
triadimenol

the following herbicides:-

| | |
|---|---|
| acetochlor | 2,4-D esters |
| alachlor | 2,4-DB esters |
| anilophos | di-allate |
| | 2,4-DP esters |
| benfluralin | diclofop-methyl |
| bensulide | diethatyl |
| benzoylprop-ethyl | dimethachlor |
| bifenox | dinitramine |
| bromoxynil octanoate | EPTC |
| butachlor | ethalfluralin |
| butamifos | ethofumesate |
| butralin | fenoxaprop-ethyl |
| butylate | flamprop-methyl |
| | fluazifop butyl |
| flurochloridone | fluchloralin |
| chlorpropham | flumentralin |
| clopyralid | flurorodifen |
| ethylhexyl ester | fluoroglycofen ethyl |
| cycloate | flurecol-butyl |
| cycloxydim | |
| fluroxypry 1-methyl | oxadiazon |
| heptyl ester | oxyfluorfen |
| fluroxypyr ester | pendimethalin |
| haloxyfop ester | phenisopham |
| (methyl/ethoxyethyl) | phenmedipham |
| ioxynil octanoate | picloram esters |
| isopropalin | profluralin |
| MCPA esters | propachlor |
| MCPB esters | propanil |
| CMPP esters | pyridate |
| metolachlor | quizalafop-ethyl |
| molinate | sethoxydim |
| monalide | triallate |
| napropamide | triclopyr esters |
| nitrofen | tridiphane |
| trifluralin | |

2-(4-(2-fluoro-4-bromophenoxy) phenoxy propionic acid esters and the resolved isomers 2-(4((3-fluoro-5-(trifluoromethyl)-2-pyridinyl)oxy) phenoxy propanoic acid esters and their resolved isomers.

The first active component may be an organosoluble derivative of a pesticidal compound which is itself poorly organosoluble or insoluble, such as cyhexatin dodecylbenzene sulphonate.

The first pesticidal component may also be a compatible mixture of two such pesticidal substances, for example a solution of one such substance in another, or a eutectic mixture of two such substances (e.g. a eutectic mixture of fluroxypyr 1-methyl heptyl ester with bifenox.

The compositions of the invention may also include optional adjuvants such as freezing point depressants preferably in amounts of 0-15%, flow aids to prevent caking or aid in the redispersion of bottom sediment preferably in amounts of 0-5%, thickening agents preferably in amounts of 0-3% and defoamers preferably in amounts of 0-1% to improve the overall properties under field storage and use conditions.

Similarly conventional pesticide adjuvants such as solvents, surfactants for increasing penetration of the active substances or salts may be incorporated into the compositions to maintain or improve biological efficacy of the composition. These may be incorporated into the oil phase or aqueous phase as appropriate, typically in amounts of from 0 to 50% by weight.

The compositions of the invention may be prepared by first preparing an oil-in-water emulsion and subsequently adding a polymer latex dispersion, with stirring at a temperature from 0°C to 100°C, preferably from 10°C to 80°C, more preferably from 20°C to 50°C.

The oil phase may contain from 10 to 80% w/v of the pesticide, preferably 10 to 60% and most preferably 20 to 50% w/v. The latex content of the composition will depend upon the latex type as well as the pesticide and surfactant type but may vary from 5 to 80% w/v, preferably 5 to 60% w/v and most preferably 10 to 50% w/v.

The emulsion may be prepared prior to addition of the polymer dispersion or by addition of the solution of the pesticide in the non-aqueous solvent to the polymer dispersion. A variety of stirring methods may be employed, from simple shaking, stirring through to sonication and high shear emulsification, including bead milling. The method employed, the temperature chosen and the time taken for equilibration will depend upon

    a) the nature and amount of the pesticidal compound and solvent employed.

    b) the nature and amount of latex employed.

    c) the nature and amount of surfactant employed.

The second active component may be, for example, a water soluble component which is present in the aqueous phase of the resulting composition. The second active component is preferably a pesticide, for example a pesticide which is intrinsically water soluble, or a water-soluble salt derivative such as a salt of an otherwise water-insoluble pesticide.

Examples of such second active pesticide components which are either water-soluble or have water soluble-salts include the insecticides:

    acephate
    cartap
    omethoate
    oxamyl

the fungicides

    bronopol
    dichlorophen
    dimethirimol
    dodemorph
    dodine
    fenpropimorph
    quazatine
    tridemorph

(±) 1-amino propyl phosphonic acid

the herbicides

    acifluorfen
    alloxydim
    amitrole
    ammonium sulphamate
    asulam
    benazolin
    bentazone
    bromoxynil
    clopyralid
    2,4-D
    dalapon
    2,4-DB
    2,4-DES
    dicamba
    dichlorprop
    difenzoquat
    diquat
    endothal
    fenprop
    fomesafen
    glufosinate
    glyphosate
    imazapyr
    imazaquin
    ioxynil

MCPA
MCPB
CMPP
paraquat
picloram
triclopyr
the plant growth regulators
chlormequat     ethophon
chlorphonium    mepiquat
daminozide      piproctanyl.

The second active component may also be, for example, a water insoluble (or poorly water soluble) pesticide or mixture of pesticides present as a particulate dispersion in the aqueous phase. Examples of such second active pesticide components include the insecticides:

bendiocarb
binapacryl
carbaryl
carbofuran
chlormethiuron
clofentezine
cyhexatin
diflubenzuron
gamma-HCH
hexythiazox
trichlorfon

teflubenzuron and other acyl urea insecticides such as chorfluazuron, and "Active N" referred to above.

the fungicides

| | |
|---|---|
| anilazine | iprodione |
| anthraquinone | 3-isopropoxy-<br>o-toluanilide |
| captafol | mancozeb |
| captan | ofurace |
| carbendazim | copper oxinate |
| chlorothalonil | pencycuron |
| copper oxychloride | thiabendazole |
| cyprofuram | thiophanate methyl |
| dichlofluanid | thiram |
| dichlobutrazol | |
| dichloran | |
| dithianon | |
| ethirimol | |
| fentin | |
| flutriafol | |
| hexaconazole | |

the herbicides
aclonifin
ametryn
atrazine

aziprotryne
bifenox
chloridazon
chlorotoluron
chlorsulfuron
cyanazine
difenoxuron
diflufenican
diuron
fluometuron
isoproturon
isoxaben
karbutilate
lenacil
metamitron
metazachlor
methabenzthiazuron
metoxuron
metribuzin
metsulfuron
neburon
proglinazine ethyl
promethryne
propazine
simazine

Certain active subtances may be present either in the first dispersed phase, or in the continuous phase depending on the formulation type. For example, esters of 2,4-D are soluble in organic solvents, and thus suitable for incorporation into the first dispersed phase. Its sodium salt is water-soluble and suitable for incorporation as the second active component dissolved in the aqueous continuous phase.

In certain circumstances, it is even possible for the same pesticidal substance to be contained within both the first and the second active components. For example, fluoroxypyr 1-methyl heptyl ester forms a eutectic mixture in a 3:1 ratio mixture with bifenox. It is however not normally possible to incorporate further bifenox to make a storage-stable preparation, without the use of substantial quantities of organic solvents, which give rise to phytotoxicity.

Thus, in one embodiment, the first pesticidal component is a eutectic mixture of first and second pesticidal substances (for example fluoroxypyr 1-methyl heptyl ester and bifenox), and the second component is a solid phase of one of the said substances, dispersed in the aqueous phase (for example dispersed bifenox).

The compositions of the invention may be produced by the preparation of a latex dispersion containing the first active component by a variety of means as discussed earlier, followed by blending with an aqueous solution or dispersion of the second active component. The aqueous dispersions of this second active or mixture of components may be prepared by the many techniques known in the art such as sand milling, bead milling and dry milling followed by dispersion in water. Such aqueous dispersions generally contain a surfactant system composed of a wetting agent and a dispersing agent or a combined wetter/dispersing agent, a suspension/flow and optionally an antifreeze agent and an antifoam agent. The levels of all such additives may be adjusted dependent upon the ratio of latex containing first pesticide phase to second active.

The range and choice of adjuvants is well known to those skilled in the art but as general examples the wetting agents employed may be an alkali metal salt of a phosphate partial ester of a ($C_6$-$C_{24}$) alkyl polyglycol ether (containing 2-20 EO units), an alkali metal salt of an alkyl naphthalene sulphonic acid or a nonionic polyglycol ether. The dispersing agents can be alkali metal or amine salts or sulfosuccinic acid half-esters, amine salts of phosphate partial esters of polyaryl phenol polyglycol ethers, alkali metal lignin sulfonates or condensation products of formaldehyde and cresols. Small quantities of an aluminium silicate having a lamellar structure of the bentonite type, such as for example, Hectorite or montmorillonite may be added as a thickener with or without small quantities of a polysaccharide such as for example, Rhodopol 23. Antifreeze agents may include ethylene glycol, propylene glycol or glycerol. The aqueous solutions may be prepared by simple dissolution of a water-soluble chemical in water or by neutralisation of an acid with an appropriate base or by neutralisation of a base with an appropriate acid. The aqueous continuous phase may contain active substances both dispersed in it and dissolved in it resulting in a three phase pesticide system for the product of the invention.

As discussed earlier the first and second pesticide components may be physico-chemically incompatible, chemically incompatible or biologically incompatible.

They also have the ability, since they contain film forming latexes in many cases, to be utilised in those areas where film forming is a desirable effect, such as in seed treatments and pest control useage in dwelling places. The invention is illustrated by the following examples which are not limiting but merely illustrative:

The following list identifies the various starting materials used in the Examples.

## ACTIVES

| | Common Name | Trade Mark |
|---|---|---|
| A | chlortoluron | DICURANE |
| B | chlorpyrifos-methyl (technical) | RELDAN |
| C | myclobutanil | SYSTHANE |
| D | prochloraz | SPORTAK |
| E | fluoroxypyr 1-methyl heptyl ester | STARANE |
| F | isoproturon | ARELON |
| G | bifenox | MODOWN |
| H | fenpropimorph | |
| I | ioxynil octanoacetate | |
| J | copper oxinate | |
| K | anthraquinone | |
| L | nuarimol | |
| M | (+)-1-aminopropyl phosphonic acid | |
| N | 1-[3,5-dichloro-4(1,1,2,2-tetrafluoroethoxy)phenyl]-3-(2,6-difluorobenzoyl) urea | |

## SURFACTANTS

| | | |
|---|---|---|
| A | ethoxylated alcohol | ATLOX 4991 |
| B | ethoxylated alcohol blend | ATLOX 4896 |
| C | acrylic graft copolymer | ATLOX 4913 |
| D | phosphate ester | AGRILAN TKA125 |
| E | block copolymer | AGRILAN F502 |
| F | anionic ether sulphate | SOPROPHOR 4D384 |
| G | polyaryl phenol ethoxylate | SOPROPHOR BSU |
| H | half ester sulphosuccinate | PESTILISER B |
| I | ethoxylated tallow amine | ETHOMEEN T25 |
| J | block copolymer | PLURIOL PE6100 |
| K | block copolymer | PLURIOL PE6200 |
| L | phosphate ester | SOPROPHOR FL |
| M | polycarboxylate | AGRILAN F460 |
| N | block copolymer | TENSIOFIX 35600DL |

## SOLVENT

| | | |
|---|---|---|
| A | xylene | |
| B | aromatic C9 benzenoid distillate | SOLVESSO 100 |
| C | hexyl acetate | EXXATE 600 |
| D | mixed naphthalene fraction | SOLVESSO 200 |
| E | fatty acid dimethylamide | HALCOMID M-8-10 |

## POLYMER LATEXES

| | Type | Trade Mark | Particle Size (Microns) |
|---|---|---|---|
| A | terpolymer | VINAMUL 3452 | 0.1 - 0.3 |
| B | styrene butylacrylate | DOW LATEX DL420 | 0.12 - 0.15 |
| C | styrene butadiene | DOW LATEX DL893 | 0.14 - 0.2 |

## Example I

Preparation of a mixed formulation of fluroxypyr 1-methyl heptyl ester and chlorotoluron

Active E (142g) was dissolved in xylene (150g) to produce a 48.6% w/w ester solution. 300g of polymer latex B was added to 10g of surfactant I to produce a homogeneous dispersion. 292g of the ester solution was added to the latex/surfactant dispersion with high shear stirring and stirred for 30 minutes. 121g of this pesticide-containing latex dispersion was added to a previously prepared 600g/L chlorotoluron (Active A) suspension concentrate (800g) and homogenised with high shear mixing. The product was then diluted to 1 litre with water. On storage at 40°C, this product did not solidify but remained a stable mixed suspension concentrate.

## Example IA (Comparative)

Active E (330g) was dispersed in water (500g) containing surfactant E (14.0g) and propylene glycol (25g). This dispersion was bead milled until the particle size of the suspension was about 3,0 microns (vmd) by Coulter Counter TA II (Coulter Counter is a Trade Mark). The product was diluted to 1 litre with water. 100g of this milled product was added to 960g of a commercial suspension concentrate of Active A and the product homogenised with a high-shear mixer. This product on storage solidified at 40°C owing to a melting-point endotherm between fluroxypyr 1-methyl heptyl ester and chlorotoluron and was thus unacceptable.

## Example II

Preparation of a mixed formulation of fluroxypyr 1-methyl heptyl ester, ioxynil octanoate and isoproturon

Active E (45g) and active I (84g) were dissolved in solvent B (100g) and mixed with 10g surfactant F. This oil phase was added to a latex dispersion prepared by mixing a ternary latex (latex A) (230g) and water (30g) and stirred with high shear mixing for 30 minutes. This aqueous pesticide containing latex dispersion (500g) was added to a commercial isoproturon aqueous suspension concentrate (active F) (580g) and mixed for 5 minutes. This product on storage at both 40°C and 54°C showed no crystal growth or emulsion growth after a period of 3 months storage as evidenced by Coulter Counter examination and microscopic evaluation, indicating a physically stable product.

## Example IIA (Comparative)

Active E (45g) and active I (84g) were dissolved in solvent B (100g) and mixed with surfactant F (10g). This oil phase was then emulsified into water (240g) and the prepared emulsion mixed under high shear mixing with a commerical isoproturon aqueous suspension concentrate (580g) (active F). The product was then diluted with water to 1 litre (approx 25g). This product on storage at 45°C and 54°C showed crystal growth and emulsion growth after 1 months storage as evidenced by Coulter Counter examination and microscopic evaluation indicating a physically unstable mixture.

## Example III

Preparation of a mixed formulation of fluroxypyr 1-methyl heptyl ester and bifenox

A solution was prepared of 30 0g of active E a mixture of solvent D (240g) and solvent E (60g). This 50% w/w technical fluroxypyr ester solution (454.5g) was stirred into a latex/surfactant dispersion prepared by mixing latex C (454.5g) with 10g of surfactant I and 122.6g water. The mixture was stirred under high shear for 30 minutes. 260g of this aqueous pesticide containing latex dispersion was added to 416g of a commercial aqueous suspension of bifenox (active G) and diluted with water (104g) to produce a stable mixed formulation containing 50g/L fluroxypyr acid equivalent and 250g/L bifenox.

## Example IIIA (Comparative)

A solution of 89g fluroxypyr 1-methyl heptyl ester (active E) was prepared in a mixture of 120g of solvent D with 27g of solvent E.

This solution was emulsified into water (320g) containing surfactant F (15g) with a high shear mixer and the resultant emulsion mixed with a commercial bifenox aqueous suspension concentrate (493g) (active G) and diluted with water to 1 litre.

Samples of Examples III and IIIa were applied to spring barley under glasshouse conditions. The compositions were applied at application rates of 3 L/ha and 2.5 L/ha respectively, so as to provide the same application rate of the active components. The dilution was in both cases such as to provide an application rate of 200 L/ha of the dilution. The spring barley was then grown in the glasshouse for 14 days and evaluated for phytotoxicity, expressed as percentage necrosis. The results are shown in the attached table.

|  | Rate of product (L/ha) | necrosis after 14 days (%) |
|---|---|---|
| Formulation of Example III | 3 | 3,5 |
| Formulation of Example IIIA Comparative | 2.5 | 12.5 |

This illustrates the advantage of employing a pesticide containing latex formulation.

Example IV

Preparation of a mixed formulation of fluroxypyr 1-methyl heptyl ester and bifenox

Although fluroxypyr 1-methyl heptyl ester has a melting point of about 56°C, a 3:1 ratio mix of fluroxypyr ester and bifenox has a melting point of 43°C. This was utilised to prepare a low solvent pesticide containing latex dispersion for subsequent admixture with an aqueous suspension concentrate of bifenox.

Fluroxypyr 1-methyl heptyl ester and bifenox (actives E and G) in a 3:1 ratio (24g) were mixed with surfactants J (12g) and K (4g) and then mixed with high'shear agitation into a styrene-butyl acrylate latex (latex B) (40g) and the mixing continued for 30 minutes. Water (20g) was added. This pesticide containing latex dispersion (42g) was then added to a commercial bifenox aqueous suspension concentrate (55.4g) (active G) and diluted with water to 100ml to produce a formulation containing 50g/l fluroxypyr acid equivalent and 250g/L bifenox as a stable formulation.

Comparison of the phytotoxicity potential for fluroxypyr/bifenox formulations (Examples III and IV)

Samples of Examples III and IV were applied to barley, cv. Igri, grown under glasshouse conditions, at rates of 200L/ha. The barley was then grown in the glasshouse for 7 days and evaluated for phytotoxicity, scored according to the European Weed research Council scoring recommendations for crop injury (listed below).

|  |  | Crop Response |
|---|---|---|
| Rating | % Crop Injury | Verbal Description |
| 1 | 0 | No reduction or injury |
| 2 | 1.0-3.5 | Very slight discoloration |
| 3 | 3.5-7.0 | More severe but not lasting |
| 4 | 7.0-12.5 | Moderate and more lasting |
| 5 | 12.5-20.0 | Medium and lasting |
| 6 | 20.0-30.0 | Heavy |
| 7 | 30.0-50.0 | Very Heavy |
| 8 | 50.0-99.0 | Nearly destroyed |
| 9 | 100 | Completely destroyed. |

The results are as follows:

|                                | Rate of product (L/ha) | Crop Injury |
|--------------------------------|------------------------|-------------|
| Formulation of Example III     | 3                      | 3.3         |
| Formulation of Example IV      | 3                      | 1.5         |

It can be seen that the omission of solvent from the composition, in Example IV, which is made possible by the melting point depression of the mixture, gives rise to even lower phytotoxicity than in Example III.

Example V

Preparation of a seed treatment composition containing fenpropimorph, thiram and lindane

Fenpropimorph (38g) was added with high shear stirring to a sufactant/latex dispersion produced by mixing 5g of surfactant A with 38g of a latex A and water (20g). The stirring was continued for 15 minutes. This pesticide containing latex dispersion was added to a previously prepared 70% w/w lindane suspension concentrate (780g). Air-jet milled thiram (75g) added and Titanium dioxide (30g) were added, and the mixture was homogenised. 160g of a 1% xanthan gum concentrate was added and water to 1 litre to yield a stable, very fluid product. This product when applied directly to oil seed rape at a rate of 22ml/kg seed, produced a much superior coating to the standard commercial product prepared by the use of fenpropimorph as its hydrochloride salt.

Example VI

Preparation of a mixed formulation containing myclobutanil, copper oxinate and anthraquinone

Myclobutanil (50g) was dissolved in solvent C (150g). Surfactant A (5g) was added to a terpolymer latex (200g) (latex A) and to this latex/surfactant dispersion was added the previously prepared solution with high shear agitation. The stirring was continued for 20 minutes to produce a stable myclobutanil containing latex.

A suspension concentrate of copper oxinate and anthraquinone was prepared by mixing together under high shear agitation, copper oxinate (67g), anthraquinone (225g), surfactant L (30g), surfactant M (10g), Ponceau Brilliant 4R (25g), water (300g) and xanthan gum (1,5g). This mixture was then bead-milled to a particle size median of 2.0 microns and the previously prepared pesticide containing latex (400g) added thereto. The product was diluted to 1 litre with water to produce a stable mixed dispersion. This dispersion was suitable for application to cereal seeds, giving excellent coverage on wheat and barley. A similar product prepared from an emulsion of myclobutanil in solvent C without added latex was physically unstable and did not coat seeds efficiently.

Example VII

Preparation of a mixed formulation containing prochloraz and nuarimol

Prochloraz (70g) was dissolved in solvent C (25g) and added with high shear agitation to a previously prepared surfactant/latex dispersion of surfactant A (9,0g) and latex A (100g). The stirring was continued for 15 minutes to produce a stable prochloraz containing latex.

A suspension concentrate of nuarimol was prepared by mixing together under high shear agitation, nuarimol (38g), surfactant N (4.0g), surfactant M (1.0g), water (300g) and Xanthan gum (2,0g). This mixture was then bead-milled to a medium particle size of 2.5 microns and the previously prepared pesticide containing latex (204g) added thereto. The product was diluted to 1 litre with water to produce a mixed dispersion which was stable on storage for at least 1 month. A similar preparation utilising an emulsion of prochloraz in Exxate 600 without latex was physically unstable.

Example VIII

Preparation of formulation containing (±)-1-aminopropyl phosphonic acid and prochloraz

Prochloraz (70g) was dissolved in solvent C (25g) and added with high shear agitation to a previously prepared dispersion of surfactant H (5.0g) and latex A and (100g). The stirring was continued for 15 minutes to produce a stable prochloraz containing latex. This was added to a 42% w/w solution of Active M as the Potassium salt (55g) to produce a stable dispersion in this elecrolyte solution. A similar preparation of the prochloraz/Exxate 600 emulsion in the (±)-1-aminopropyl phosphonic acid solution without use of a latex was physically unstable, resulting in gross creaming of the mixture.

Example IX

Preparation of a formulation of chlorpyrifos in liquid fertiliser

Chlorpyrifos was dissolved in xylene to produce a 70% w/w solution in xylene. Surfactant H (5g) was added to 430g of this 70% w/w chlorpyrifos solution and this oil-phase added to latex A (250g) with high shear agitation and the stirring continued for 1 hour. The product was then diluted to 1 litre with water. This product was then diluted at 10% v/v into : 9:9:9 NPK solution fertilizer to produce a stable non-creaming product. A similar preparation utilising an emulsion of chlorpyrifos in xylene without latex was physically unstable, creaming rapidly on being allowed to stand unagitated.

Example X

Preparation of a mixed formulation containing myclobutanil, anthraquinone and (±)-1-aminopropyl phosphonic acid.

Myclobutanil (25g) was dissolved in Solvent C (50g) and surfactant D (4,5g) was added to the solution. This mixture was added with high shear agitation to a latex A (82g) and water (18g). The stirring was continued for 10 minutes. This pesticide containing latex dispersion was added to a previously prepared suspension concentrate of anthraquinone prepared by bead milling the following components together to an average particle size of 1.5 microns:

| | |
|---|---|
| anthraquinone | 120g |
| Surfactant C | 50g |
| Surfactant B | 25g |
| Red pigment | 75g |
| Silicone antifoam | 5g |
| Water to | 500g |

This mixture of myclobutanil and anthraquinone was finally added to a solution of (±)-1-aminopropyl phosphonic acid as the potassium salt (30g) in water (200g) and adjusted to one litre with water to produce a stable complex pesticide formulation containing myclobutanil as a latex-stabilised oil phase, anthraquinone as a particulate dispersion in water and (±)-1-amino propyl phosphonic acid (potassium salt) in aqueous solution. Attempts were made to formulate the same active components by conventional techniques, but no other formulation type was found to produce a stable product.

Example XI

Preparation of a mixed formulation containing chlorpyrifos-methyl and active N

Chlorpyrifos-methyl (active B) (240g) was dissolved in solvent B (160g) and added with high shear agitation to a previously prepared surfactant/latex dispersion of surfactant A (48g), latex A (240g) and water (200g). The stirring was continued for 30 minutes to produce a stable chlorpyrifos-methyl containing latex. To this was added 200g of a 300g/L aqueous suspension concentrate of active N prepared by mixing active N (300g), surfactant E, (25g), Xanthan gum (1,0g) and water (approx. 700g) and bead-milling this mixture to a particle size median of about 1 micron. The product was diluted to 1 litre with water and stirred to homogenise the components, yielding a product containing 240g/L chlorpyrifos methyl and 60g/L of active N. This product was stable on storage, especially showing no physical changes. A similar preparation utilising an emulsion of active B in solvent B without latex was physically unstable showing gross separation of the phases on storage for one month.

**Claims**

1. An agricultural composition, comprising at least a first active pesticidal component, and at least one other active component which is a second pesticidal component or a fertiliser,

   wherein the said at least one other active component is physico-chemically, chemically or biologically incompatible with the first pesticidal component, the composition being in the form of an aqueous dispersion having a continuous aqueous phase, and at least a first dispersed phase,

   wherein the composition comprises at least one emulsifying surfactant in an amount sufficient to render the composition water-dispersible,

   characterised in that the first dispersed phase contains particles derived from a latex, the said first pesticidal component is present in the composition substantially wholly within the said first dispersed phase, and in that the said other at least one active ingredient is essentially all present either in the continuous aqueous phase, or in a second dispersed phase, whereby the said incompatability is reduced or eliminated.

2. A composition as claimed in Claim 1 wherein the said other active component is an acid, a base, or a salt, and is present in the composition substantially wholly within the continuous phase.

3. A composition as claimed in Claim 1 wherein the said other active substance is a water-insoluble solid, and is present in the composition substantially wholly within a second dispersed phase.

4. A composition as claimed in Claim 1, wherein the said active components are such that a mixture of the said first active pesticidal component with the said other active component has a melting point which is below that of either of the said components separately.

5. A composition as claimed in Claim 1, wherein the second active component is an acidic or basic pesticide or a pesticide salt, and the first active component is a hydrolysable pesticide.

6. A composition as claimed in Claim 1 wherein the first pesticidal component is organosoluble, and the second active component is a pesticide which shows increased phytotoxicity when formulated in organic solvents.

7. A composition as claimed in Claim 6 wherein the second active component is bifenox.

8. A composition as claimed in Claim 1, wherein the surfactant is an ethoxylated or alkoxylated alcohol, an alkoxylated alcohol, an alkoxylated alkyl or polyaryl phenol, a half ester sulphosuccinate, or a phosphated polyglycol ether,

   wherein the first active pesticidal component is one or more of cypermethrin, amitraz, chlorpyrifos, chlorpyrifos-methyl, fonofos, fenpropimorph, prochloraz, propiconazole, bromoxynil octanoate, myclobutanil, diclofop-methyl, fluazifop-butyl, fluroxypyr-1-methyl heptyl ester, haloxyfop ethoxy-ethyl or methyl, sethoxydim, triclopyr butoxy ethyl ester, a 2-(4-(2-fluoro-4-bromophenoxy) phenoxy propionic acid ester or a resolved isomer thereof, a 2-4-((3-fluoro-5-(trifluoromethyl)- 2-pyridinyl)oxy) phenoxy propanoic acid ester or a resolved isomer thereof,

   and wherein the second active component is guazatine, (±)-1-aminopropyl phosphonic acid, bentazone, clopyralid, dicamba, difenzoquat, glyphosate, imazapyr, imazaquin, chlormequat, clofentezine, cyhexatin, gamma-HCH, diflubenzuron, 1-[3,5-dichloro-4 (1,1,2,2-tetrafluoroethoxy) phenyl] -3-(2,6-difluorobenzoyl) urea, hexythiazox, anthraquinone, copper oxychloride, copper oxinate, thiabendazole, thiophanate methyl, thiram, bifenox, chlorotoluron, eglinazine, isoproturon, ioxynil, bromoxynil, a biologically active derivative thereof, or a mixture of two or more such active components.

9. A process for producing an agricultural composition comprising at least a first active pesticidal component, and at least one other active component which is a second pesticidal component or a fertilizer, the other active component being physico-chemically, chemically or biologically incompatable with the first pesticidal component, which process comprises,

   forming an emulsion comprising the first pesticidal component and a surfactant, and combining the emulsion with a latex and the second active component so as to form a composition having a continuous aqueous phase, and at least a first dispersed phase, the first dispersed phase containing particles derived from the latex,

   wherein the said first pesticidal component is present in the composition substantially wholly within the said first dispersed phase, and,

wherein the said at least one other active ingredient is present in the continuous aqueous phase or in a second dispersed phase.

**10.** A method of use of an agricultural composition as claimed in Claim 1 which comprises applying the composition to the locus of a pesticidal infestation, or to a locus in which it is desired to prevent peticidal infestation.

**Patentansprüche**

**1.** Agrochemische Zusammensetzung, die mindestens eine erste aktive Pestizidkomponente und mindestens eine weitere aktive Komponente, die eine zweite Pestizid-Komponente oder eine Düngemittel ist, enthält, worin die mindestens eine weitere aktive Komponente physikalisch-chemisch, chemisch oder biologisch mit der ersten Pestizidkomponente unverträglich ist, wobei die Zusammensetzung in Form einer wäßrigen Dispersion mit einer kontinuierlichen wäßrigen Phase und mindestens einer ersten dispergierten Phase ist,

worin die Zusammensetzung mindestens ein emulgierendes oberflächenaktives Mittel in einer ausreichenden Menge enthält, um die Zusammensetzung in Wasser dispergierbar zu machen,

**dadurch gekennzeichnet,**

daß die erste dispergierte Phase von einem Latex stammende Teilchen enthält, wobei die erste Pestizidkomponente in der Zusammensetzung im wesentlichen vollständig innerhalb der ersten dispergierten Phase vorliegt und daß der mindestens eine weitere aktive Inhaltsstoff im wesentlichen vollständig entweder in der kontinuierlichen wäßrigen Phase oder in einer zweiten dispergierten Phase vorliegt, wodurch die Unverträglichkeit verringert oder beseitigt wird.

**2.** Zusammensetzung nach Anspruch 1, worin die weitere aktive Komponente eine Säure, eine Base oder ein Salz ist und in der Zusammensetzung im wesentlichen vollständig innerhalb der kontinuierlichen Phase vorliegt.

**3.** Zusammensetzung nach Anspruch 1, worin die weitere Aktivsubstanz ein wasserunlöslicher Feststoff ist und in der Zusammensetzung im wesentlichen vollständig innerhalb einer zweiten dispergierten Phase vorliegt.

**4.** Zusammensetzung nach Anspruch 1, worin die aktiven Komponenten derart sind, daß ein Gemisch der ersten aktiven Pestizidkomponente mit der weiteren aktiven Komponente einen Schmelzpunkt aufweist, der unterhalb desjenigen von jeder der einzelnen Komponenten ist.

**5.** Zusammensetzung nach Anspruch 1, worin die zweite aktive Komponente ein saures oder basisches Pestizid oder ein Pestizidsalz ist und die erste aktive Komponente ein hydrolysierbares Pestizid ist.

**6.** Zusammensetzung nach Anspruch 1, worin die erste Pestizidkomponente organisch löslich ist und die zweite aktive Komponente ein Pestizid ist, das eine erhöhte Phytotoxizität zeigt, wenn es in organischen Lösungsmitteln formuliert wird.

**7.** Zusammensetzung nach Anspruch 6, worin die zweite aktive Komponente Bifenox ist.

**8.** Zusammensetzung nach Anspruch 1, worin das oberflächenaktive Mittel ein ethoxylierter oder alkoxylierter Alkohol, ein alkoxylierter Alkohol, ein alkoxyliertes Alkyl- oder Polyarylphenol, ein Halbestersulfosuccinat oder ein phosphatierter Polyglycolether ist,

worin die erste aktive Pestizidkomponente eine oder mehrere aus Cypermethrin, Amitraz, Chlorpyrifos, Chlorpyrifos-methyl, Fonofos, Fenpropimorph, Prochloraz, Propiconazol, Bromoxyniloctanoat, Myclobutanil, Diclofop-methyl, Fluazifop-butyl, Fluroxypyr-1-methylheptylester, Haloxyfop-ethoxy-ethyl oder -methyl, Sethoxydim, Trichlopyrbutoxyethylester, ein 2-(4-(2-Fluor-4-bromphenoxy)phenoxypropionsäureester oder ein aufgelöstes Isomer davon, ein 2-4-((3-Fluor-5-(trifluormethyl)-2-pyridinyl)oxy-)phenoxypropansäureester oder ein aufgelöstes Isomer davon ist,

und worin die zweite aktive Komponente Guazatin, (+/-)-1-Aminopropylphosphonsäure, Bentazon, Clopyralid, Dicamba, Difenzoquat, Glyphosat, Imazapyr, Imazaquin, Chlormequat, Clofentezin, Cyhexatin, Gamma-HCH, Diflubenzuron, 1-[3,5-Dichlor-4(1,1,2,2-tetrafluorethoxy)phenyl]-3-(2,6-difluorbenzoyl)harnstoff, Hexythiazox, Anthrachinon, Kupferoxychlorid, Kupferoxinat, Thiabendazol, Thiophanatmethyl, Thiram, Bifenox, Chlortoluron, Eglinazin, Isoproturon, Ioxynil, Bromoxynil, ein biologisch aktives Derivat davon oder ein Gemisch von zwei oder mehreren solcher aktiven Komponenten ist.

9. Verfahren zur Herstellung einer agrochemischen Zusammensetzung, die mindestens eine erste aktive Pestizidkomponente und mindestens eine weitere aktive Komponente, die eine zweite Pestizidkomponente oder ein Düngemittel ist, enthält, wobei die weitere aktive Komponente physikalisch-chemisch, chemisch oder biologisch mit der ersten Pestizidkomponente unverträglich ist, wobei das Verfahren umfaßt:
Herstellen einer Emulsion, welche die erste Pestizidkomponente und ein oberflächenaktives Mittel enthält, und Vereinigen der Emulsion mit einem Latex und der zweiten aktiven Komponente, um eine Zusammensetzung mit einer kontinuierlichen wäßrigen Phase und mindestens einer ersten dispergierten Phase zu bilden, wobei die erste dispergierte Phase von dem Latex stammende Teilchen enthält,
worin die erste Pestizidkomponente in der Zusammensetzung im wesentlichen vollständig innerhalb der ersten dispergierten Phase vorliegt und
worin der mindestens eine weitere aktive Inhaltsstoff in der kontinuierlichen wäßrigen Phase oder in einer zweiten dispergierten Phase vorliegt.

10. Verfahren zur Verwendung einer agrochemischen Zusammensetzung nach Anspruch 1, umfassend das aufbringen der Zusammensetzung auf den Ort eines Schädlingsbefalls oder auf einen Ort, an dem die Vermeidung eines Schädlingsbefalls gewünscht wird.


## Revendications

1. Composition pour l'agriculture, comprenant au moins un premier composant pesticide actif et au moins un autre composant actif qui est un second composant pesticide ou un engrais,
ledit autre composant actif au nombre d'au moins un étant incompatible, du point de vue physico-chimique, chimique ou biologique, avec le premier composant pesticide, la composition se trouvant sous la forme d'une dispersion aqueuse comportant une phase aqueuse continue et au moins une première phase dispersée,
la composition comprenant au moins un tensioactif émulsifiant en une proportion suffisante pour rendre la composition dispersable dans l'eau,
caractérisée en ce que la première phase dispersée contient des particules dérivées d'un latex, ledit premier composant pesticide se trouve, dans la composition, pratiquement totalement au sein de ladite première phase dispersée, et en ce que ledit autre ingrédient actif au nombre d'au moins un se trouve pratiquement totalement présent soit dans la phase aqueuse continue, soit dans une seconde phase dispersée, grâce à quoi ladite incompatibilité est diminuée ou éliminée.

2. Composition selon la revendication 1, dans laquelle ledit autre composant actif est un acide, une base ou un sel, et se trouve, dans la composition, pratiquement totalement au sein de la phase continue.

3. Composition selon la revendication 1, dans laquelle ladite autre substance active est un solide insoluble dans l'eau, et se trouve, dans la composition, pratiquement totalement au sein d'une seconde phase dispersée.

4. Composition selon la revendication 1, dans laquelle lesdits composants actifs sont tels qu'un mélange dudit premier composant actif pesticide avec ledit autre composant actif présente un point de fusion inférieur à ceux de l'un et l'autre desdits composants pris séparément.

5. Composition selon la revendication 1, dans laquelle le second composant actif est un pesticide acide ou basique ou un sel pesticide, et le premier composant actif est un pesticide hydrolysable.

6. Composition selon la revendication 1, dans laquelle le premier composant pesticide est organosoluble et le second composant actif est un pesticide qui présente une phytotoxicité accrue lorsqu'il se trouve en composition formulée dans des solvants organiques.

7. Composition selon la revendication 6, dans laquelle le second composant actif est du bifenox.

8. Composition selon la revendication 1, dans laquelle le tensioactif est un alcool éthoxylé ou alcoxylé, un alcool alcoxylé, un alkyl- ou polyaryl-phénol alcoxylé, un semiester sulfosuccinate ou un éther de polyglycol phosphaté,

dans laquelle le premier composant actif pesticide est un ou plusieurs des cyperméthrine, amitraz, chlorpyrifos, chlorpyrifos-méthyl, fonofos, fenpropimorph, prochloraz, propiconazole, bromoxynil-octanotate, myclo-butanil, diclofop-méthyl, fluazifop-butyl, ester 1-Méthyl-heptylique du fluroxypyr, haloxyfop-éthoxy-éthyl ou -méthyl, sethoxydim, ester butoxyéthylique de triclopyr, un ester de l'acide 2-(4-(2-fluoro-4-bromophénoxy)phénoxy)propionique ou un isomère résolu d'un tel ester, un ester de l'acide 2-(4-((3-fluoro-5-trifluorométhyl-2-pyridinyl)oxy)phénoxy)propanoïque ou un isomère résolu d'un tel ester,

et dans laquelle le second composant actif est de la guazatine, de l'acide (±)-1-aminopropylphosphonique, du bentazone, du clopyralid, du dicamba, du difenzoquat, du glyphosate, de l'imazapyr, de l'imazaquin, du chlormequat, de la clofentezine, de la cyhexatine, du gamma-HCH, du diflubenzuron, de la 1-[3,5-dichloro-4-(1,1,2,2-tétrafluoroéthoxy)phényl]-3-(2,6-difluorobenzoyl)urée, de l'hexythiazox, de l'anthraquinone, de l'oxychlorure de cuivre, de l'oxinate de cuivre, du thiabendazole, du thiophanate-méthyle, du thiram, du bifenox, du chlorotoluron, de l'eglinazine, de l'isoproturon, de l'ioxynil, du bromoxynil, un dérivé biologiquement actif de ceux-ci ou un mélange de deux de ces composants actifs ou plus.

9. Procédé de production d'une composition destinée à l'agriculture, comprenant au moins un premier composant actif pesticide et au moins un autre composant actif qui est un second composant pesticide ou un engrais, l'autre composant actif étant incompatible du point de vue physicochimique, chimique ou biologique avec le premier composant pesticide, lequel procédé comprend :

la formation d'une émulsion comprenant le premier composant pesticide et un tensioactif, et le mélange de cette émulsion avec un latex et le second composant actif, de façon à former une composition comportant une phase aqueuse continue et au moins une première phase dispersée, cette première phase dispersée contenant des particules dérivées du latex,

ledit premier composant pesticide se trouvant, dans la composition, pratiquement totalement au sein de ladite première phase dispersée, et

ledit autre ingrédient actif au nombre d'au moins un se trouvant dans la phase aqueuse continue ou dans une seconde phase dispersée.

10. Procédé d'utilisation d'une composition pour l'agriculture, conforme à la revendication 1, qui comporte l'application de la composition à un lieu infesté de plantes ou d'insectes nuisibles ou à un lieu dans lequel on désire prévenir une infestation par des insectes ou des plantes nuisibles.